# EUROPÄISCHE PATENTANMELDUNG

(11) **EP 1 971 018 A1**
(43) Veröffentlichungstag der Anmeldung: **17.09.2008**
(21) Anmeldenummer: 07005140.4
(22) Anmeldetag: 13.03.2007
(51) Int. Cl.: H02M 3/158, H02M 7/5395, H02M 7/5387

(54) **Schaltungsvorrichtung zum transformatorlosen Umwandeln einer Gleichspannung in eine Wechselspannung mittels zweier DC/DC Wandler und einem AC/DC Wandler**

(71) Anmelder: SMA Solar Technology AG, 34266 Niestetal (DE)
(72) Erfinder: Mallwitz, Regine, Dr., 34131 Kassel (DE)
(74) Vertreter: Walther, Walther & Hinz GbR

(57) **Zusammenfassung**

In einer Schaltungsvorrichtung zum transformatorlosen Umwandeln einer elektrischen Gleichspannung einer zweipoligen, geerdeten Gleichspannungsquelle (1) mit einem ersten Spannungspol (+) und einem zweiten Spannungspol (-) in eine Wechselspannung werden durch Erdung der Gleichspannungsquelle (1) gefährlich kapazitive Ableitströme vermieden und der DC/AC-Wandler (400) bei einer geregelten Zwischenkreisspannung betrieben, wobei der Gleichspannungsquelle (1) und dem DC-AC-Wandler (400) eine DC-DC-Wandlerstufe (300) zwischengeschaltet wird, die an ihrem Ausgang eine bezüglich des Erdungspunktes symmetrische +/- Spannung bereitstellt, indem zwei in Reihe geschaltete und in ihrem Verknüpfungspunkt geerdete Kondensatoren (41,42) mit gleicher Polarität und geregelt aufgeladen werden durch zwei hintereinander geschaltete Tief-Hochsetzsteller (100,200).

## Beschreibung

Die Erfindung betrifft insbesondere eine Schaltungsvorrichtung zum transformatorlosen Umwandeln einer elektrischen Gleichspannung, z. B. aus einem Solargenerator, in eine Wechselspannung zur Einspeisung in ein Energieversorgungsnetz, wobei durch Erdung der Gleichspannungsquelle das Auftreten gefährlicher kapazitiver Ableitströme verhindert wird.

Gleichspannungsquellen, wie Solargeneratoren, Brennstoffzellen, Batterien und dergleichen weisen häufig eine stark variierende Spannung und eine hohe Innenimpedanz auf. Um elektrische Energie aus solchen Quellen in ein Energieversorgungsnetz einzuspeisen, bedarf es einer Anpasseinrichtung. Zum Umwandeln von beispielsweise durch einen Solargenerator zur Verfügung gestellter Gleichspannung in eine Wechselspannung sind Solarwechselrichter bekannt. Es ist bekannt, elektrische Energie mit diesen Wechselrichtern in ein Energieversorgungsnetz, das ein öffentliches Energieversorgungsnetz oder ein Inselnetz für einen oder wenige Verbraucher sein kann, einzuspeisen.

Wird ein hoher Wirkungsgrad erzielt, so wird damit die Wirtschaftlichkeit der Anpasseinrichtung verbessert und die Wärmeverluste der Anlage verringert. Ein hoher Wirkungsgrad ist daher von großer Bedeutung. Dennoch sind auch Sicherheitsaspekte und Kosten zu berücksichtigen, die den Wirkungsgrad beinträchtigen können.

Bekannte Anpasseinrichtungen mit Transformatoren, d.h. mit galvanischer Trennung, haben in der Regel einen schlechteren Wirkungsgrad als solche ohne Transformatoren. Transformatorlose Wechselrichter für die Netzeinspeisung zeichnen sich durch einen sehr hohen Wirkungsgrad und ein geringes Gewicht aus. Dem Solargenerator wird dabei in bekannter Weise ein transformatorloser DC-AC-Wandler nachgeschaltet, der die Gleichspannung der Quelle in eine Wechselspannung umwandelt. Transformatorlose Wechselrichter ohne galvanische Trennung können jedoch für Sicherheitsprobleme auf Grund von Erdungsproblemen verantwortlich sein.

Gleichspannungsquellen, wie beispielsweise ein Solargenerator, weisen eine stark variierende Ausgangsspannung auf, z.B. durch Temperaturänderung auch im Punkt maximaler Leistung (MPP). Durch das Vorschalten eines DC/DC-Wandlers, beispielsweise eines Hoch- oder Tiefsetzstellers, kann in bekannter Weise erreicht werden, dass der nachfolgende DC/AC-Wandler nicht für den schwankenden Eingangsspannungsbereich, sondern für einen festen Arbeitspunkt im DC-Zwischenkreis ausgelegt werden kann. Zudem ist gewährleistet, dass die für den Einspeisebetrieb erforderliche Eingangsspannung am DC/AC-Wandler auch unter ungünstigen Bedingungen bereitgestellt werden kann. Der Scheitelwert der Netzspannung ist in der Regel niedriger als die Spannung im Zwischenkreis, d. h. am Eingang des DC/AC-Wandlers. Sinkt die Spannung am Solargenerator, z.B. witterungsbedingt, bei den nach dem Stand der Technik bekannten Lösungen unter einen bestimmten Wert, wird die Solaranlage vom Netz getrennt, so dass eine Einspeisung nicht mehr erfolgt. Dies senkt die Wirtschaftlichkeit der Anlage.

Ein Wechselrichterkonzept mit einem Tiefsetzsteller ist in der DE 20 2006 001 063 U1 gezeigt und beschrieben. In der DE 20 2006 001 063 U1 wird eine Lösung erläutert, bei der der DC/DC-Wandler einen Tiefsetzsteller umfasst, dem eine Vollbrücke bzw. ein DC/AC-Wandler zur Netzeinspeisung nachgeschaltet ist. Bei dieser Lösungen ist der Solargenerator jedoch nicht geerdet. Nachteilig an dieser Schaltung ist, dass sich das Bezugspotential eines nicht geerdeten Solargenerators zur Erde dynamisch mit den Taktimpulsen der Wechselrichter verändert. Die parasitären Kapazitäten zwischen Generator und Erde werden entsprechend der Taktung auf- bzw. entladen. Dabei entstehen Ströme, sogenannte kapazitive Ableitströme, zwischen Solargenerator und Erde. Diese stellen einerseits eine Gefahr für den Menschen bei Berührung des Solargenerators dar, andererseits können Schädigungen am Solargenerator selbst auftreten.

Aus der DE 10 2004 037 446 B4 ist ein transformatorloser Wechselrichter für die Umwandlung von solarem Gleichstrom in sinusförmige Wechselspannung bekannt. Das Auftreten kapazitiver Ableitströme am Solargenerator soll dadurch verhindert werden, dass dem Solargenerator ein symmetrischer Gleichspannungshochsetzsteller nachgeschaltet ist. Durch das Vorhandensein jeweils einer Diode im positiven als auch im negativen Pfad im symmetrischen Gleichspannungshochsetzsteller wird am Solargenerator das Auftreten von Ableitströmen verhindert. Ist der Schalter des Hochsetzstellers geschlossen, sperren die Dioden des Hochsetzstellers. Dadurch wird der Solargenerator von der Wechselspannungsseite entkoppelt. Ein Stromfluss auf der Generatorseite in Form von Ableitströmen soll nach der Beschreibung der Druckschrift nicht auftreten. Der genannte Hochsetzsteller stellt gleichzeitig eine feste Betriebsspannung für den nachfolgenden DC-AC-Wandler bereit. Von Nachteil ist jedoch, dass der Solargenerator keinen definierten Bezug zu einem Erdpotential hat. Eine Erdung des Generators ist nämlich prinzipbedingt nicht möglich. Erst die Erdung ermöglicht es jedoch, auf sichere Weise kapazitive Ableitströme zu verhindern.

In der US 7,064,969 B2 wird ein transformatorloser Wechselrichter für die Umwandlung von solarem Gleichstrom in sinusförmige Wechselspannung vorgeschlagen. Einem geerdeten Solargenerator ist eine Parallelschaltung aus einem ersten Pufferkondensator und einem Inverswandler, einem sogenannten Tief-Hochsetzsteller, nachgeschaltet. Der Solargenerator lädt diesen ersten Pufferkondensator in Abhängigkeit von der zur Verfügung stehenden Solarleistung auf. Ein Tief-Hochsetzsteller lädt einen zweiten Kondensator. Die Kondensatoren sind in Reihe geschaltet und an ihrem Verknüpfungspunkt geerdet. Damit ist auch der Solargenerator geerdet. Den beiden in Reihe geschalteten Kondensatoren folgt eine Brückenschaltung, die über ein aus einer Drossel und einem Kondensator bestehenden Netzfilter eine sinusförmige Wechselspannung für die Einspeisung in ein Energieversorgungsnetz bereitstellt. Bei dieser Lösung kann zwar durch die Erdung des Solargenerators das Auftreten von gefährlichen Ableitströmen verhindert werden, der Tief-Hochsetzsteller ermöglicht hier jedoch keinen festen Betriebspunkt für den DC/AC-Wandler, sondern nur das Aufladen des zweiten Halbbrückenkondensators. Die Spannung am ersten Kondensator entspricht direkt der Ausgangsspannung des Solargenerators, während die Spannung am zweiten Kondensator durch den Tief-Hochsetzsteller einstellbar ist. Damit besteht einerseits eine fixe Kopplung zur Generatorspannung, andererseits eine frei wählbare. Dies ist eine erhebliche Einschränkung der Eingangsspannung des DC-AC-Wandlers, da die Ausgangsspannung in engen Grenzen toleriert ist.

Der Erfindung liegt die Aufgabe zugrunde, eine Schaltungsvorrichtung zum transformatorlosen Umwandeln einer elektrischen Gleichspannung in eine Wechselspannung zur Netzeinspeisung zu schaffen, bei der sowohl die Gleichspannungsquelle geerdet werden kann, um gefährliche Arbeitsströme zu verhindern, als auch eine Netzeinspeisung unter extrem schlechten Bedingungen, wie z. B. sehr niedrige Generatorspannungen, möglich ist, wobei ein hoher Wirkungsgrad erreicht wird, insbesondere durch einen festen Betriebspunkt des DC-AC-Wandlers.

Diese Aufgabe wird durch eine Schaltungsvorrichtung mit den Merkmalen der unabhängigen Ansprüche gelöst.

Erfindungsgemäß ist eine DC-AC-Anpasseinrichtung vorgesehen, die dem geerdeten Solargenerator nachgeschaltet ist und an ihrem Ausgang eine auf Erdpotential bezogene symmetrische +/- Spannung bereitstellt, deren Amplitude auf einen konstanten Wert geregelt werden kann. Diese Anpasseinrichtung besteht im Wesentlichen aus zwei hintereinander geschalteten Inverswandlern, auch invertierender Tief-Hochsetzsteller genannt, zur Ladung je eines Kondensators. Diese Kondensatoren sind in Reihe geschaltet und in ihrem Verknüpfungspunkt geerdet. Dies Kondensatoren werden mit gleicher Polarität geladen. Die Höhe der Spannungen an den Kondensatoren ist regelbar.

Diese Kondensatoren sind insbesondere Bestandteil einer nachgeschalteten DC-AC-Wandlerschaltung, die impulsgesteuerte Spannungsimpulse zur Regelung sinusförmigen Netzstromes zur Einspeisung in ein Energieversorgungsnetz erzeugt.

Dieser DC-AC-Wandler ist insbesondere mit mehreren Halbleiterschaltern versehen, die entsprechend der Regelung getaktet werden. Dies geschieht vorzugsweise bei einem festen Betriebspunkt. Die Schalter werden insbesondere nur für diesen Betriebspunkt, z. B. eine feste DC-Spannung, ausgelegt. Dadurch können Schalter mit niedriger Sperrspannungsfähigkeit gewählt werden, die in der Regel geringere Schalt- und Durchlassverluste aufweisen. Dies hat einen höheren Wirkungsgrad des DC-AC-Wandlers zur Folge. Vorteilhaft ist, dass die beschriebenen Schalter in der Regel günstiger in der Anschaffung sind.

Der feste Betriebspunkt wird insbesondere so gewählt, dass eine Einspeisung möglich ist. So sollte die Spannung am Eingang des DC-AC-Wandlers mindestens 10% über dem Scheitelwert der Wechselspannung des zu speisenden Netzes liegen.
Spannungsschwankungen an der Gleichspannungsquelle können durch die erfindungsgemäße DC-DC-Anpassungseinrichtung ausgeregelt werden. Die Spannung insbesondere an einem Solargenerator kann, z. B. witterungsbedingt, sehr niedrige Werte annehmen. Ohne die erfindungsgemäße Anpasseinrichtung müsste der Solargenerator vom Netz getrennt werden. Die Erfindung erhöht somit die Wirtschaftlichkeit einer Energieerzeugungsanlage.

Ein aus der erfindungsgemäßen Vorrichtung geschaffener Wechselrichter wird vorzugsweise bei Solaranlagen üblich mit Hilfe eines Reglers in Form einer MPPT (Maximum Power Point Tracking) so betrieben, dass der Gleichspannungsgenerator unter allen gegebenen Bedingungen die maximal mögliche Leistung abgibt. Damit ist ein hoher Wirkungsgrad der Gesamtanlage erreichbar.

Die zweipolige Quelle, vorzugsweise ein Solargenerator, ist erfindungsgemäß geerdet. Dadurch werden kapazitive Ableitströme und deren Folgen, wie Gefährdung von Menschen und Beschädigungen des Generators vermieden.

Erfindungsgemäß ist eine weitere DC-DC-Anpasseinrichtung vorgesehen, die dem geerdeten Solargenerator nachgeschaltet ist und an ihrem Ausgang eine auf Erdpotential bezogene symmetrische +/- Spannung bereitstellt, deren Amplitude auf einen konstanten Wert geregelt werden kann. Diese Anpasseinrichtung besteht im Wesentlichen aus einem Hochsetzsteller und einem invertierenden Tief-Hochsetzsteller, die in vorteilhafter Weise parallel geschaltet sind und zur Ladung je eines Kondensators dienen. Diese Kondensatoren sind in Reihe geschaltet und in ihrem Verknüpfungspunkt geerdet. Die Kondensatoren werden mit gleicher Polarität geladen. Die Höhe der Spannungen an den Kondensatoren ist regelbar.

Durch die Erfindung kann ein transformatorloser Wechselrichter bzw. Umrichter mit höchstem Wirkungsgrad zur Netzeinspeisung bereitgestellt werden, der das Auftreten von Ableitströmen an der Gleichspannungsquelle durch Erdung verhindert und dessen DC/AC-Wandler für einen festen DC-Arbeitspunkt bzw. festen DC-Betriebspunkt ausgelegt werden kann.

Der durch die erfindungsgemäße Schaltungsvorrichtung geschaffene Wechselrichter ist zur Umwandlung einer stark variierenden Gleichspannung geeignet, insbesondere aus einem Solargenerator, in eine Wechselspannung zur Einspeisung in ein öffentliches Energieversorgungsnetz. Dem Solargenerator und dem DC/AC-Wandler ist eine DC/DC-Wandlerstufe zwischengeschaltet. Dadurch können Strom und Spannung am Eingang des DC/AC-Wandlers auf feste Werte geregelt werden. Eine Einspeisung in das Netz ist damit auch bei niedrigen Spannungen am Solargenerator möglich, insbesondere auch dann, wenn ein kleiner Scheitelwert der Netzspannung vorhanden ist. Dadurch können Netzspannungsschwankungen ohne Einbuße des Wirkungsgrades kompensiert werden.

Auch andere Schwankungen, wie Spannungsschwankungen auf Grund von Temperaturänderungen an einem Solargenerator können bei hohem Wirkungsgrad und ohne Unterbrechung des Energieflusses berücksichtigt werden.

Der Wechselrichter ist ohne Transformator ausgeführt. Dies hat einen hohen Wirkungsgrad zur Folge. Vorteilhaft ist auch das geringe Gewicht.

Die zweipolige Quelle wird außerdem geerdet. Dadurch werden kapazitive Ableitströme und deren Folgen, wie Gefährdung von Menschen und Beschädigung des Generators vermieden, und zwar wird insbesondere vermieden, dass sich das Bezugspotential des Solargenerator zur Erde dynamisch mit Taktimpulsen der Wechselrichter verändert. Parasitäre Kapazitäten werden entsprechend einer Taktung nicht mehr auf- bzw. entladen, so dass gefährliche kapazitive Ableitströme zwischen Gleichspannungsquelle und Erde vermieden werden.

In einer weiteren vorteilhaften Ausgestaltung der Erfindung ist vorgesehen, dass praktisch zwei Anpasseinrichtungen vorgesehen sind, wobei der Gleichspannungsquelle eine erste Anpasseinrichtung zur Ladung des ersten Kondensators nachgeschaltet ist und der Gleichspannungsquelle parallel zur ersten Anpasseinrichtung eine zweite Anpasseinrichtung zur Ladung des zweiten Kondensators nachgeschaltet ist. Dadurch ist die Schaffung der bezüglich Erdpotential symmetrischen +/- Spannung in sehr genauer und einfacher Weise möglich. Dadurch ist ein hoher Berührungsschutz und ein hoher Wirkungsgrad möglich. Es kann zudem sowohl die DC Spannung erhöht werden, wenn bei hoher Erwärmung von Photovoltaikzellen der Gleichspannungsquellen beispielsweise die Generatorspannung sinkt, und es kann beispielsweise die Generatorspannung gesenkt werden, wenn sich der Arbeitspunkt des Generators in Richtung Leerlaufpunkt bewegt. Dies ist möglich bei einem sehr hohen Wirkungsgrad. Auch Netzspannungsschwankungen können bei hohem Wirkungsgrad kompensiert werden.

Durch den impulsweitengesteuerten Wandler kann es auch möglich sein, eine Regelung der Energieeinspeisung zu bewirken, so dass Spannungsschwankungen des Wechselspannungsnetzes berücksichtigt werden, da der DC-Betriebspunkt des DC/AC-Wandlers fest liegt.

Die genannten Vorteile werden zudem durch eine einfache Schaltung gelöst.

Weitere vorteilhafte Ausgestaltungen der Erfindung sind in den Unteransprüchen gekennzeichnet.

Anhand eines Ausführungsbeispiels wird die Erfindung nachstehend näher erläutert.

Es zeigen:
- Fig. 1: ein Darstellung einer Schaltungsanordnung einer erfindungsgemäßen Schaltungsvorrichtung zur Einspeisung in eine Phase eines Wechselspannungsnetzes;
- Fig. 2: eine Darstellung einer Schaltungsanordnung einer Variante der erfindungsgemäßen Schaltungsvorrichtung zur dreiphasigen Netzeinspeisung;
- Fig. 3: eine Darstellung einer weiteren Schaltungsanordnung einer erfindungsgemäßen Schaltungsvorrichtung zur Einspeisung in ein einphasiges Netz und
- Fig. 4: eine Darstellung einer weiteren Schaltungsanordnung einer Variante der erfindungsgemäßen Schaltungsvorrichtung zur Einspeisung in ein dreiphasiges Netz.

In den Figuren sind gleiche Teile mit denselben Bezugszeichen versehen.

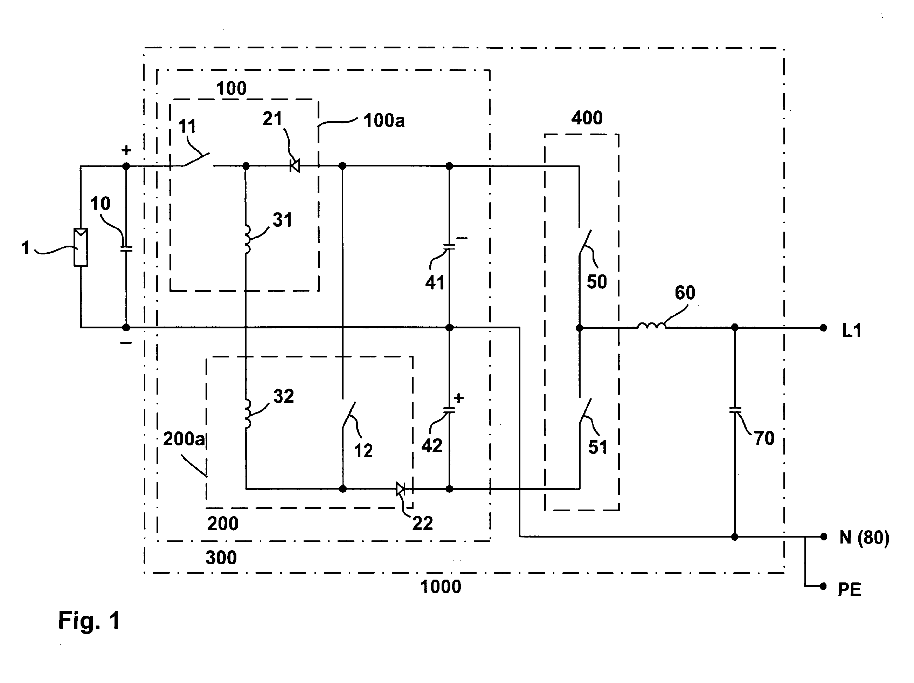

Figur 1 zeigt einen Wechselrichter 1000 für eine Gleichspannungsquelle 1 a, insbesondere einen Photovoltaikgenerator 1 mit einem oder mehreren Photovoltaikmodulen, wobei die Module in Reihe geschaltet und/oder parallel geschaltet sein können. Der Wechselrichter 1000 ist in Figur 1 einphasig ausgeführt.

Der Photovoltaikgenerator 1 hat insbesondere nur zwei Anschlüsse, und zwar einen Pluspol (+), der in der Zeichnung oben liegt, und einen Minuspol (-). Der Minuspol (-) ist mit dem Erdungspunkt, d. h. dem Null-Leiter (N) des Wechselspannungsnetzes verbunden.

Parallel zum Photovoltaikgenerator 1 ist ein Pufferkondensator 10 geschaltet. Diesem folgt ein DC/DC-Wandler 300. Dieser DC/DC-Wandler 300 wandelt die Generatorgleichspannung so um, dass an seinem Ausgang eine symmetrische +/- Spannung anliegt.

Dem DC-DC-Wandler 300 ist ein DC-AC-Wandler 400 mit einem Netzfilter, bestehend aus einer Drossel 60 und einem Kondensator 70, nachgeschaltet. Diese Anordnung wandelt die Ausgangsspannung des DC-DC-Wandlers 300 in eine zur Netzeinspeisung geeignete Wechselspannung um.

Wie Fig. 1 zeigt, ist dem Solargenerator bzw. dem Photovoltaikgenerator 1 mit dem Pufferkondensator 10 ein invertierender Tief-Hochsetzsteller 100a nachgeschaltet, und zwar bestehend aus einem Schalter 11, einer Diode 21 und einer Induktivität 31. Diese Anordnung lädt den Kondensator 41 mit im Vergleich zum Photovoltaikgenerator 1 umgekehrter Polarität auf. Durch entsprechende Taktung des Schalters 11 kann die Spannung am Kondensator 41 geregelt werden. Die Funktionsweise eines invertierenden Tief-Hochsetzstellers ist bekannt.

Ein zweiter invertierender Tief-Hochsetzsteller 200a besteht, wie in Figur 1 gezeigt ist, aus einem Schalter 12, einer Diode 22 und einer Induktivität 32. Die Anordnung lädt den Kondensator 42. Durch entsprechende Taktung des Schalters 12 kann die Spannung am Kondensator 42 geregelt werden. Der zweite Tief-Hochsetzsteller 200a ist praktisch dem Kondensator 41 nachgeschaltet und invertiert die Spannung des Kondensators 41 an ihrem Eingang.

Die Kondensatoren 41 und 42 sind mit gleicher Polung in Reihe geschaltet. Durch die obere Anordnung wird der erste Kondensator 41 durch die untere Anordnung der zweite Kondensator 42 geladen. Durch entsprechende Taktung der Schalter 11 bzw. 12 kann die Spannung am Kondensator 41 bzw. 42 eingestellt werden.

In Figur 1 ist ein DC-AC-Wandler 400 mit den Schaltern 50, 51 versehen. Durch eine impulsweitengesteuerte Ansteuerung dieser Schalter 50, 51 kann eine Wechselspannung am Ausgang bereitgestellt werden.

Der Wechselspannungsausgang der in Figur 1 gezeigten Halbbrücke ist über einen Filter, bestehend aus der Drossel 60 und dem Kondensator 70, mit dem Wechselspannungsnetz zwischen den Anschlüssen L1 und N verbunden.

Vorzugsweise sind die Schalter 11, 12, 50 und 51 übliche Halbleiterschalter, insbesondere MOSFETs, FETs oder IGBTs mit Inversdiode.

Zur Erhöhung des Wirkungsgrades der DC-DC-Anpasseinrichtung bzw. des DC-DC-Wandlers 300 können den Dioden 21 und 22 verlustarme Halbleiterschalter parallelgeschaltet werden, die in den Leitphasen der Dioden zugeschaltet werden. Der DC-DC-Wandler 300 ermöglicht die Steuerung der Zwischenkreisspannung, d. h. Eingangsspannungen, für den DC-AC-Wandler 400.

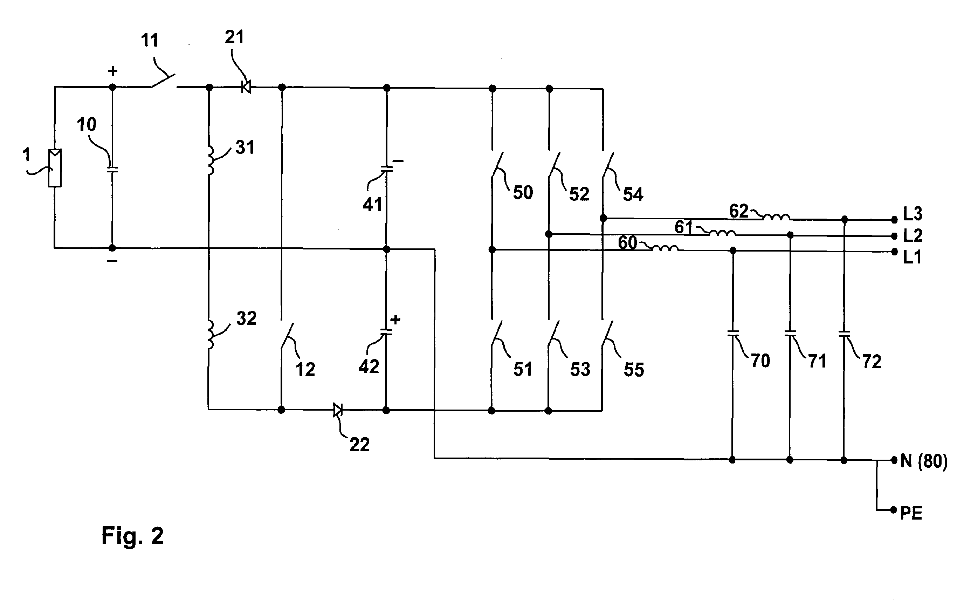

Der DC/AC-Wechselrichter 1000 kann um weitere Brückenzweige, bestehend aus jeweils zwei in Reihe geschaltete Schalter, erweitert werden. Damit ist auch eine mehrphasige Einspeisung möglich. So zeigt Figur 2 eine Anordnung zur Einspeisung in ein dreiphasiges Netz.

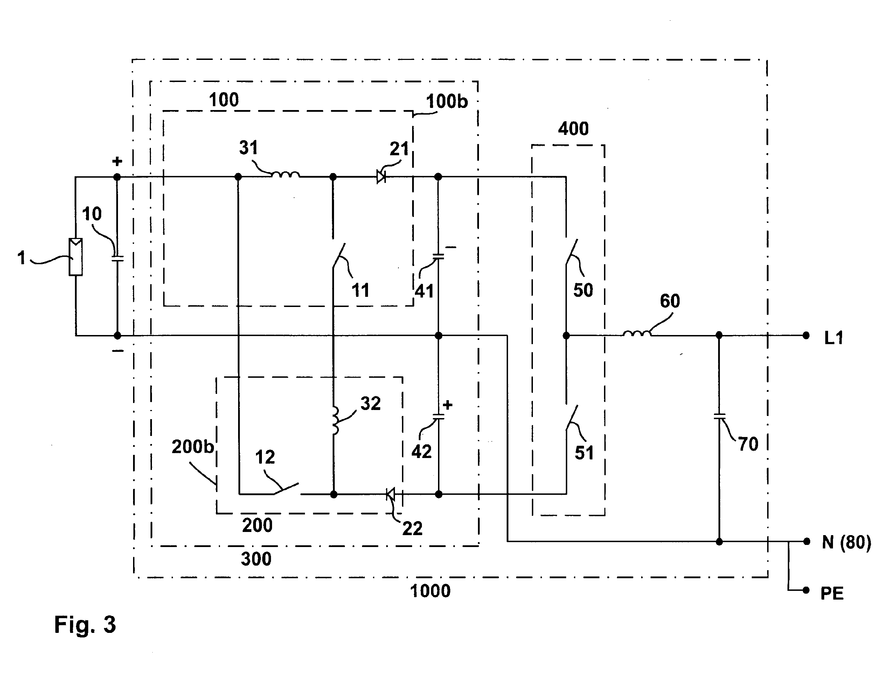

Figur 3 zeigt eine andere Ausführungsform des Wechselrichters 1000 für den Photovoltaikgenerator 1.

Der Photovoltaikgenerator 1 hat zwei Anschlüsse, und zwar einen Pluspol (+), der Zeichnung oben liegt, und einen Minuspol (-). Der Minuspol (-) ist mit dem Null-Leiter (N) des Wechselspannungsnetzes verbunden.

Wie Figur 3 zeigt, ist dem Solargenerator 1 mit dem Pufferkondensator 10 ein Hochsetzsteller 100b nachgeschaltet, und zwar bestehend auf einem Schalte 11, einer Diode 21 und einer Induktivität 31. Diese Anordnung 100b lädt den Kondensator 41. Durch entsprechende Taktung des Schalters 11 kann die Spannung am Kondenstor 41 geregelt werden. Die Funktionsweise eines Hochsetzstellers ist bekannt.

Ebenfalls dem Photovoltaikgenerator 1 mit dem Pufferkondensator 10 nachgeschaltet und damit parallel zur Anordnung ist ein invertierender Tief-Hochsetzsteller 200b. Dieser Tief-Hochsetzsteller 200b besteht aus einem Schalter 12, einer Diode 22 und einer Induktivität 32. Dieser Tief-Hochsetzsteller 200b lädt den Kondensator 42. Durch entsprechende Taktung des Schalters 12 kann die Spannung am Kondensator 42 geregelt werden. Die Funktionsweise eines Tief-Hochsetzstellers ist bekannt.

Die Kondensatoren 41, 42 sind auch hier in Reihe geschaltet und werden durch die Anordnungen 100b und 200b so geladen, dass sie in Reihe geschaltet in gleicher Weise gepolt sind. Durch entsprechende Taktung der Schalter 11 bzw. 12 kann die Spannung am Kondensator 41 bzw. 42 eingestellt werden.

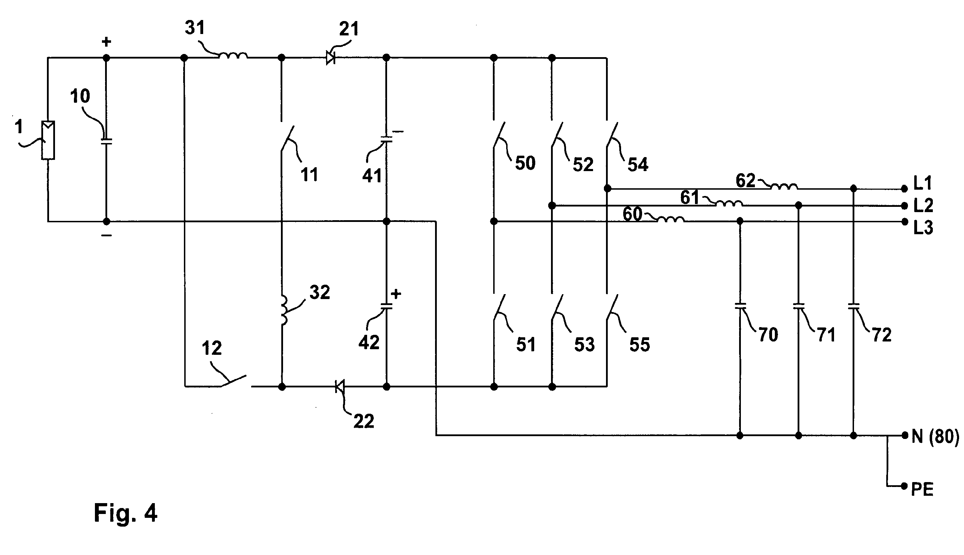

Der DC/AC-Wechselrichter 1000 kann um weitere Brückenzweige, bestehend aus jeweils zwei in Reihe geschalteten Schaltern, erweitert werden. Damit ist auch eine mehrphasige Einspeisung möglich. So zeigt Figur 4 eine Anordnung zur Einspeisung in ein dreiphasiges Netz.

Bei den Ausführungsvarianten nach Fig. 1 und 3 sind zwei Anpasseinrichtungen 100, 200 vorhanden, wobei die erste Anpasseinrichtung 100 einen ersten Kondensator 41 auflädt und die zweite Anpasseinrichtung 200 einen zweiten Kondensator 42 auflädt. Die Anpasseinrichtungen 100, 200 sind so ausgeführt, dass eine bezüglich dem Erdpotential 70 symmetrische +/- Ausgangsspannung an der DC/DC-Wandlerstufe vorhanden ist. Weiterhin ist erfindungsgemäß der Photovoltaikgenerator 1 an einem der Spannungspole, insbesondere dem Minuspol, geerdet.

Als Anpassungseinrichtung ist jede Stufe zu verstehen, die eine eingangsseitige Gleichspannung ausgangsseitig verändert, so dass der Arbeitspunkt der Gleichspannungsquelle 1 insbesondere des Photovoltaikgenerators 1 veränderbar ist. Eine Anpassungseinrichtung ist insbesondere jeder Hochsetzsteller oder jeder Tief-Hochsetzsteller.

Die Erfindung eignet sich für einen transformatorlosen Wechselrichter bzw. Umrichter zur Umwandlung von Gleichspannung aus einer Gleichspannungsquelle, beispielsweise einem Solargenerator, aber auch einer Windenergieanlage mit PM-Generator, einer Brennstoffzelle, einer Batterie oder einer anderen Gleichspannungsquelle in eine Wechselspannung zur Einspeisung in ein Energieversorgungsnetz, beispielsweise das öffentliche Energieversorgungsnetz oder ein Inselnetz.

Durch die Erdung der zweipoligen Gleichspannungsquelle wird das Auftreten kapazitiver Ableitströme verhindert.

### Bezugszeichenliste

- 1: Solargenerator
- 1a: Gleichspannungsquelle

- 10: Pufferkondensator
- 11,12: Schalter

- 21,22: Diode

- 31,32: Induktivität

- 40,42: Kondensator

- 50,51: Schalter

- 60,61,63: Filterdrossel

- 70,71,72: Filterkondensator

- 100,200: Anpasseinrichtungen

- 300: DC/AC-Wandler
- 400: DC/AC-Wandler

- 1000: Wechselrichter

## Patentansprüche

1. Schaltungsvorrichtung zum transformatorlosen Umwandeln einer elektrischen Gleichspannung einer zweipoligen, geerdeten Gleichspannungsquelle (1 a) mit einem ersten Spannungspol (+) und einem zweiten Spannungspol (-) in eine Wechselspannung zur Einspeisung in ein Wechselspannungsnetz, wobei vorhanden ist:
- Ein erster invertierender Tief-Hochsetzsteller (100a), der der Gleichspannungsquelle (1 a) parallel nachgeschaltet ist,
- und ein zweiter invertierender Tief-Hochsetzsteller (200a), der dem ersten Tief-Hochsetzsteller (100a) parallel nachgeschaltet ist,
- die einen DC-DC-Wandler (300) bilden, der die Gleichspannung der Gleichspannungsquelle in eine auf Erdpotential bezogene symmetrische +/- Spannung ausgangsseitig umsetzt, ,
- einen DC-AC-Wandler (400) der impulsweitengesteuert zur Regelung eines sinusförmigen Stromverlaufs und zur Regelung einer Einspeisungsgröße für ein Energieverorgungsnetz (60).

2. Schaltungsvorrichtung zum transformatorlosen Umwandeln einer elektrischen Gleichspannung einer zweipoligen, geerdeten Gleichspannungsquelle (1 a) mit einem ersten Spannungspol (+) und einem zweiten Spannungspol (-) in eine Wechselspannung zur Einspeisung in ein Wechselspannungsnetz, wobei vorhanden ist:
- ein Hochsetzsteller (100b), der der Gleichspannungsquelle (1 a) parallel nachgeschaltet ist,
- und ein invertierender Tief-Hochsetzsteller (200b) der der Gleichspannungsquelle (1 a) parallel nachgeschaltet ist,
- die einen DC-DC-Wandler (300) bilden, der die Gleichspannung der Gleichspannungsquelle in eine auf Erdpotential bezogene symmetrische +/- Spannung ausgangsseitig umsetzt,
- einen DC-AC-Wandler (400), der impulsweitengesteuert zur Regelung eines sinusförmigen Stromverlaufs und zur Regelung einer Einspeisungsgröße für ein Energieversorgungsnetz (90)

3. Schaltungsvorrichtung nach Anspruch 1 oder 2,
**dadurch gekennzeichnet,**
**dass** am einen Eingang des DC-AC-Wandlers eine geregelte +/- DC-Spannung und/oder ein geregelter konstanter +/- Strom vorliegt.

4. Schaltungseinrichtung nach einem der vorhergehenden Ansprüche,
**dadurch gekennzeichnet,**
**dass** ein DC-Betriebspunkt mindestens 10 % höher liegt als ein maximaler Momentanwert der Netzspannung eines angeschlossenen Netzes (80).

5. Schaltungseinrichtung nach einem der vorhergehenden Ansprüche,
**dadurch gekennzeichnet,**
**dass** der DC-AC-Wandler (400) ein- oder mehrphasig ausgeführt ist.

6. Schaltungseinrichtung nach einem der vorhergehenden Ansprüche,
**gekennzeichnet durch**
eine Ausführung für einen Photovoltaikgenerator (1) als Gleichspannungsquelle.

7. Schaltungsvorrichtung, insbesondere nach einen der vorhergehenden Ansprüche, zum transformatorlosen Umwandeln einer elektrischen Gleichspannung einer zweipoligen, geerdeten Gleichspannungsquelle (1 a) mit einem ersten Spannungspol (-) und einem zweiten Spannungspol (+) in eine Wechselspannung,
- wobei ein DC-AC-Wandler (400) zur Spannungsumwandlung einer einen ersten Kondensator (41) und einen zweiten Kondensator (42) umfassenden DC-DC-Wandlerstufe (300) vorhanden ist,
- sowie die Kondensatoren (41, 42) der DC-DC-Wandlerstufe (300) in Reihe geschaltet sind und einen auf Erdungspotential liegenden Verknüpfungspunkt (V) aufweisen, so dass eine bezüglich dem Erdungspotential (70) symmetrische +/Spannung ausgangsseitig der DC-DC-Wandlerstufe (300) anliegt,
- wobei der Gleichspannungsquelle (1 a) mindestens eine Anpasseinrichtung (100, 200) zur Ladung eines der Kondensatoren (41, 42) nachgeschaltet ist, die parallel zum Kondensator (41, 42) liegt, wobei jede Anpasseinrichtung (100, 200) derart ausgeführt ist, dass ein fester DC-Betriebspunkt für den DC-AC-Wandler (400) vorhanden ist,
- und die Gleichspannungsquelle (1 a) an einem der Spannungspole (-) geerdet ist.

8. Schaltungseinrichtung nach Anspruch 7,
**dadurch gekennzeichnet,**
**dass** zwei Anpasseinrichtungen (100, 200) vorhanden sind, wobei
- der Gleichspannungsquelle (1 a) eine erste Anpasseinrichtung (100) zur Ladung des ersten Kondensators (41) nachgeschaltet ist und
- der Gleichspannungsquelle (1 a), die vorzugsweise parallel zur ersten Anpasseinrichtung (200) zur Ladung des zweiten Kondensators (42) nachgeschaltet ist.

9. Verfahren zum Ableiten kapazitiver Ableitströme und Schutz vor Gefährdung von Personen und vor Beschädigungen eines Solargenerators mit einer Schaltungsvorrichtung nach einem der vorhergehenden Ansprüche

## Geänderte Patentansprüche

### Geänderte Patentansprüche gemäss Regel 137(2) EPÜ.

**1.** Verfahren zum Ableiten kapazitiver Ableitströme und Schutz vor Gefährdung von Personen und vor Beschädigungen eines Solargenerators mit einer Schaltungsvorrichtung zum transformatorlosen Umwandeln einer elektrischen Gleichspannung eines zweipoligen, geerdeten Photovoltaikgenerators (1) mit einem ersten Spannungspol (+) und einem zweiten Spannungspol (-) in eine Wechselspannung zur Einspeisung in ein Wechselspannungsnetz, wobei vorhanden ist:
a) ein Hochsetzsteller (100b), der der Gleichspannungsquelle (1 a) parallel nachgeschaltet ist und einen ersten Kondensator (41) lädt,
b) und ein invertierender Tief-Hochsetzsteller (200b) der der Gleichspannungsquelle (1a) parallel nachgeschaltet ist und einen zweiten zum ersten Kondensator in Reihe geschalteten Kondensator (42) lädt,
c) die einen DC-DC-Wandler (300) bilden, der die Gleichspannung der Gleichspannungsquelle in eine auf Erdpotential bezogene symmetrische, an den Kondensatoren (41, 42) anliegende +/Spannung ausgangsseitig umsetzt, wobei der Verknüpfungspunkt zwischen beiden Kondensatoren (41, 42) geerdet ist,
d) ein DC-AC-Wandler (400) mit Schaltern (50, 51), der impulsweitengesteuert zur Regelung eines sinusförmigen Stromverlaufs und zur Regelung einer Einspeisungsgröße für ein Energieversorgungsnetz (90), wobei am einen Eingang des DC-AC-Wandlers eine geregelte +/- DC-Spannung vorliegt.
e) wobei der Hochsetzsteller (100b) und der invertierenden Tief-Hochsetzsteller (200b) einen fester DC-Betriebspunkt für den DC-AC-Wandler (400) einstellen, indem ein Schalter (11) des Hochsetzstellers (100b) durch entsprechende Taktung die Spannung am ersten Kondensator (41) regelt und ein Schalter (12) des invertierenden Tief-Hochsetzstellers (43) durch entsprechende Taktung die Spannung am ersten Kondensator (41) regelt,
f) wobei die Sperrspannungsfähigkeit der Schalter (50, 51) des DC-AC-Wandlers (400) für diesen DC-Betriebspunkt ausgelegt sind,
g) sowie der DC-Betriebspunkt mindestens 10 % höher liegt als ein maximaler Momentanwert der Netzspannung eines angeschlossenen Netzes (80).

**2.** Schaltungseinrichtung zur Durchführung des Verfahrens nach Anspruch 1,
**dadurch gekennzeichnet,**
**dass** der DC-AC-Wandler (400) ein- oder mehrphasig ausgeführt ist.

**3.** Schaltungsanordnung nach Anspruch 2, **dadurch gekennzeichnet, dass** zwischen den Hochsetzsteller (100b) und dem ersten Kondensator eine erste Diode (21) vorhanden ist und zwischen dem invertierenden Tief-Hochsetzsteller (200b) und dem zweiten Kondensator eine zweite Diode (22) vorhanden ist, wobei den Dioden (21, 22) Halbleiterschalter parallelgeschaltet sind, die in den Leitphasen den Dioden (21, 22) zugeschaltet werden.
